(19) Europäisches Patentamt
European Patent Office
Office européen des brevets

(11) EP 0 762 408 B1

(12) EUROPEAN PATENT SPECIFICATION

(45) Date of publication and mention of the grant of the patent:
**11.12.2002 Bulletin 2002/50**

(51) Int Cl.[7]: **G11B 7/24**

(21) Application number: **96401863.4**

(22) Date of filing: **30.08.1996**

# (54) Multi-layer optical disk

Mehrschichtige optische Platte

Disque optique à plusieurs couches

(84) Designated Contracting States:
**DE FR GB**

(30) Priority: **31.08.1995 JP 22434195**

(43) Date of publication of application:
**12.03.1997 Bulletin 1997/11**

(73) Proprietor: **SONY CORPORATION**
**Tokyo (JP)**

(72) Inventors:
- **Kaneko, Masahiko, c/o Sony Corp.**
**Shinagawa-ku, Tokyo (JP)**
- **Aratani, Katsuhisa, c/o Sony Corp.**
**Shinagawa-ku, Tokyo (JP)**
- **Nakaoki, Ariyoshi, c/o Sony Corp.**
**Shinagawa-ku, Tokyo (JP)**

(74) Representative: **Thévenet, Jean-Bruno et al**
**Cabinet Beau de Loménie**
**158, rue de l'Université**
**75340 Paris Cédex 07 (FR)**

(56) References cited:
**EP-A- 0 388 852** **EP-A- 0 658 887**
**WO-A-96/04650** **US-A- 5 202 875**

- **PATENT ABSTRACTS OF JAPAN vol. 018, no. 278 (P-1743), 26 May 1994 & JP-A-06 044611 (NIPPON COLUMBIA CO LTD), 18 February 1994,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 762 408 B1

Printed by Jouve, 75001 PARIS (FR)

## Description

## BACKGROUND OF THE INVENTION

### 1. Field of the Invention

The present invention relates to a multi-layer optical disk, in which the information memory structure for storing information is constituted by a plurality of information memory layers and which can process a large capacity of information by changing the focal point of a read light beam to thereby reproduce the information from each of the information memory layers. More particularly, the present invention relates to an improvement in order to ensure disk compatibility with two types of read light beams having different wavelengths.

### 2. Description of the Related Art

Recently, in conjunction with development of so-called multi-media, it has been strongly required to store a large quantity of information (such as needed for digital animation), to carry out random-access and to reproduce as necessary.

An optical disk, for example a compact disk and the like, is an information memory medium which can be accessed randomly, has a large capacity and is removable. Although the optical disk is used widely in various fields, it is now required to process more information on one surface of the disk than is possible with a conventional type, because of the above-mentioned necessity.

In view of the above-mentioned circumstance, a multi-layer optical disk in which information memory layers for storing information are laminated in the thickness direction (in the form of the multi-layer) is proposed in order to expand the capacity of the optical disk. This multi-layer optical disk uses an information memory layer in the form of a multi-layer to greatly increase the amount of information that can be read out from one surface of the disk. Also this multi-layer optical disk can process a large quantity of information, without losing the random-access function, by changing the focal point of the read light beam on the basis of each of the information memory layers.

The following are typical reports with respect to multi-layer disks:

(1) a concept of reproducing a multi-layer disk by changing a focal point (U.S.A. Patent No.3946367);
(2) a method of reading out by means of transmission light or reflection light by using a multi-layer optical disk having information memory layers laminated in a form of several layers on one surface of a substrate (U.S.A. Patent No.4219704); and
(3) a reproducing system for a multi-layer optical disk having an aberration correcting function within an optical system (U.S.A. Patent No.5202875).

The following relate to actual configurations of the multi-layer optical disk:

(1) a dedicated reproduction two-layer optical disk (W.Imaio, H.J.Rosen, K.A.Rubin, T.S.Strand, and M.E.Best, Proc, SPIE vol.2338, Optical Data Storage, Dana Point, 1994 pp.254-259); and
(2) a write-once type two-layer optical disk (K.A.Rubin, H.J.Rosen, W.W.Tang, W.Imaio, and T.S.Strand, Proc. SPIE vol.2338, Optical Data Storage, Dana Point, 1994 pp.247-253).

In all of the above-mentioned disks, the disk is designed in such a way that the information memory layer has a multi-layer construction, that translucent material having a high light transmittance, such as dielectric film or dye, is used as configuration material of a record layer near the substrate (a first information memory layer), and that a reflectivity $R_1$ from the first information memory layer is nearly equal to a final reflectivity $T_1^2R_2$ from a second information memory layer. Here, $R_1$ is the reflectivity of the first information memory layer, $T_1$ is the transmittance of the first information memory layer, and $R_2$ is the reflectivity of the second information memory layer.

The reproduction performance of the multi-layer optical disk is mainly determined on the basis of the reflectivity and the transmittance of the first information memory layer formed on an incident side of the read light beam. However, these items depend on spectral characteristics (a refractive index n and an extinction coefficient k) of the translucent film material used in the first information memory layer, and a film thickness thereof.

However, in general, there is wavelength dependency in optical constants, such as the refractive index n, the extinction coefficient k and the like. Therefore, selection of the material of the translucent film providing an optimum reproducing condition, or disk construction features such as film thickness and the like are varied on the basis of the wavelength of the used read light beam, for example, a semiconductor laser. Thus, for example, in the case of a multi-layer optical disk adjusted for a read light beam having the wavelength of 635 nm, the reproduction is not always carried out under a correct condition, and it is necessary to prepare a disk adjusted separately if it is desired to use another read light beam wavelength of, for example, 480 nm. Thus, there is a defect in so-called compatibility and the like.

Especially, since making the wavelength of the read light beam shorter is an important technical requirement for making the capacity of the optical disk larger, it is very important to solve the above problem of compatibility.

## SUMMARY OF THE INVENTION

It is therefore an object of the present invention to provide a multi-layer optical disk, in which even if the wavelength of the read light beam is changed at a time of reproducing, both of reproduction signals from a first information memory layer and a second information memory layer have sufficient levels.

The inventors of the present invention have researched for a long time in order to attain the above-mentioned object. As a result, it has been discovered that the reflectivity from the respective layers at the second read light beam wavelength can be nearly equal to each other, by setting the spectral characteristics (the refractive index n and the extinction coefficient k) of the first information memory layer to a correct range at the first read light beam wavelength. Further, the multi-layer optical disk having an actual reflection coefficient can be implemented. Accordingly, the present invention can be completed.

Namely, the present invention is characterized by a multi-layer optical disk as defined in claim 1 and, in which a first information memory layer and a second information memory layer are sequentially film-formed on a substrate and information recorded on the first information memory layer and the second information memory layer is reproduced by irradiating the read light beam from a substrate side,

wherein the first information memory layer and the second information memory layer can be reproduced by a first read light beam and a second read light beam which is shorter in wavelength than the first read light beam, and

wherein the first information memory layer is made of material in which the refractive index n and the extinction coefficient k in a wavelength region of the first read light beam meet the following conditions:

$$0 \leq k \leq 0.25$$

$$n = \alpha - k + 2.8$$

(where $\alpha$ is a constant and $0.15 \leq \alpha \leq 0.45$)

The above-mentioned conditions are represented by the slant line area in Fig.1, where the refractive index n is indicated on the horizontal axis and the extinction coefficient k is indicated on the vertical axis.

A film can be constituted in which both of the reflectivity from the first information memory layer and the second information memory layer are sufficiently large, at both the read light beam wavelengths of, for example, 635 nm and 480 nm, by selecting translucent film material of the first information memory layer so as to meet the above conditions. It is possible to arbitrarily switch the information between the first information memory layer and the second information memory layer to thereby reproduce data, by changing the focal point for reproduction. That is, it is possible to implement a large capacity multi-layer optical disk having compatibility with two different wavelengths.

However, if the spectral characteristic of the first information memory layer is too greatly varied at the second read light beam wavelength, the region in which the above compatibility can be attained becomes narrow, and in the end such a region does not exist. Thus, it is desirable that the difference $\Delta k$ between the extinction coefficient in a wavelength region of the first read light beam of the first information memory layer and the extinction coefficient in a wavelength region of the second read light beam be equal to or less than 0.3.

As the translucent film material which meets the above-mentioned conditions, there is, for example, Si system material including hydrogen and at least one of nitride and oxygen, such as Si-N-H, Si-O-H, Si-N-O-H and the like.

The multi-layer optical disk in accordance with the present invention is constituted in such a way that the first information memory layer and the second information memory layer which meet the above-mentioned conditions are sequentially film-formed on the substrate. Here, the film thicknesses of the respective information memory layers are arbitrary. However, in order to ensure the two wavelength compatibility, it is desirable that the film thickness of the first information memory layer be between 40 nm and 60 nm.

In the multi-layer optical disk having the above mentioned configuration, it is desirable to dispose a spacer layer between the first information memory layer and the second information memory layer, in order to reliably separate the focal points in the respective information memory layers. It is also desirable that this spacer layer be made of optically transparent material and that a thickness thereof should be equal to or more than 30 $\mu$m.

In the present invention, it is possible arbitrarily to set the wavelength of the first read light beam and the wavelength of the second read light beam. However, the wavelength region of the first read light beam is selected between 630 nm and 690 nm, for example 635 nm, for utilization. On the other hand, the wavelength region of the second read light beam is assumed to be shorter than that of the first read light beam, and selected between 450 nm and 630 nm, for example 480 nm.

According to the present invention having the above-mentioned configuration, the reflection coefficients from the first information memory layer and the second information memory layer can be made nearly equal to each other and can take values attainable in practice. As a result, it is possible to implement the multi-layer optical disk having compatibility with read light beams at two different wavelengths.

Further objects and advantages of the present invention will be apparent from the following description of the preferred embodiments of the invention as illustrated in the accompanying drawings.

## BRIEF DESCRIPTION OF THE DRAWINGS

Fig.1 is a characteristic graph indicating a correct range for the refractive index n and the extinction coefficient k in a first information memory layer;

Fig.2 is a sectional view that schematically shows a main portion of one configuration example of a multi-layer optical disk to which the present invention is applied;

Fig.3 is a sectional view that schematically shows a main portion and illustrates another configuration example of a multi-layer optical disk to which the present invention is applied;

Fig.4 is a diagrammatic view showing reflected light from respective information memory layers;

Fig.5A is a characteristic graph indicating reflection coefficients $R_1$, $R_2$, and $R_U$ in the case of a wavelength of 635 nm (where, refractive index n=3.18 and extinction coefficient k=0.04 at a time of the wavelength = 635 nm);

Fig.5B is a characteristic graph indicating $R_1$, $R_2$, and $R_U$ in the case of a wavelength of 480 nm (where, n=3.32 and k=0.18 at a time of the wavelength = 480 nm);

Fig.6A is a characteristic graph indicating $R_1$, $R_2$, and $R_U$ in the case of a wavelength of 635 nm (where, n=2.95 and k=0.22 at a time of the wavelength = 635 nm);

Fig.6B is a characteristic graph indicating $R_1$, $R_2$, and $R_U$ in the case of a wavelength of 480 nm (where, n=3.28 and k=0.33 at a time of the wavelength = 480 nm);

Fig.7A is a characteristic graph indicating $R_1$, $R_2$, and $R_U$ in the case of a wavelength of 635 nm (where, n=2.91 and k=0.06 at a time of the wavelength = 635 nm);

Fig.8A is a characteristic graph indicating $R_1$, $R_2$, and $R_U$ in the case of a wavelength of 635 nm (where, n=3.18 and k=0.17 at a time of the wavelength = 635 nm);

Fig.8B is a characteristic graph indicating $R_1$, $R_2$, and $R_U$ in the case of a wavelength of 480 nm (where, n=3.4 and k=0.26 at a time of the wavelength =480 nm);

Fig.9A is a characteristic graph indicating $R_1$, $R_2$, and $R_U$ in the case of a wavelength of 635 nm (where, n=2.81 and k=0.24 at a time of the wavelength = 635 nm);

Fig.9B is a characteristic graph indicating $R_1$, $R_2$, and $R_U$ in the case of a wavelength of 480 nm (where, n=3.1 and k=0.43 at a time of the wavelength = 480 nm);

Fig.10A is a characteristic graph indicating $R_1$, $R_2$, and $R_U$ in the case of a wavelength of 635 nm (where, n=2.96 and k=0.02 at a time of the wavelength = 635 nm);

Fig.10B is a characteristic graph indicating $R_1$, $R_2$, and $R_U$ in the case of a wavelength of 480 nm (where, n=3.22 and k=0.19 at a time of the wavelength = 480 nm);

Fig.11A is a characteristic graph indicating $R_1$, $R_2$, and $R_U$ in the case of a wavelength of *635* nm (where, n=2.98 and k=0.24 at a time of the wavelength = 635 nm);

Fig.11B is a characteristic graph indicating $R_1$, $R_2$, and $R_U$ in the case of a wavelength of 480 nm (where, n=3.31 and k=0.38 at a time of the wavelength = 480 nm);

Fig.12A is a characteristic graph indicating $R_1$, $R_2$, and $R_U$ in the case of a wavelength of 635 nm (where, n=2.90 and k=0.12 at a time of the wavelength = 635 nm);

Fig.12B is a characteristic graph indicating $R_1$, $R_2$, and $R_U$ in the case of a wavelength of 480 nm (where, n=3.28 and k=0.28 at a time of the wavelength = 480 nm);

Fig.13A is a characteristic graph indicating $R_1$, $R_2$, and $R_U$ in the case of a wavelength of 635 nm (where, n=2.82 and k=0.14 at a time of the wavelength = 635 nm);

Fig.14A is a characteristic graph indicating $R_1$, $R_2$, and $R_U$ in the case of a wavelength of 635 nm (where, n=3.05 and k=0.02 at a time of the wavelength = 635 nm);

Fig.14B is a characteristic graph indicating $R_1$, $R_2$, and $R_U$ in the case of a wavelength of 480 nm (where, n=3.35 and k=0.16 at a time of the wavelength = 480 nm);

Fig.15A is a characteristic graph indicating $R_1$, $R_2$, and $R_U$ in the case of a wavelength of 635 nm (where, n=2.90 and k=0.05 at a time of the wavelength = 635 nm);
Fig.16A is a characteristic graph indicating $R_1$, $R_2$, and $R_U$ in the case of a wavelength of 635 nm (where, n=3.01 and k=0.04 at a time of the wavelength = 635 nm);
Fig.16B is a characteristic graph indicating $R_1$, $R_2$, and $R_U$ in the case of a wavelength of 480 nm (where, n=3.28 and k=0.17 at a time of the wavelength = 480 nm);
Fig.17A is a characteristic graph indicating $R_1$, $R_2$, and $R_U$ in the case of a wavelength of 635 nm (where, n=3.24 and k=0.05 at a time of the wavelength = 635 nm);
Fig.17B is a characteristic graph indicating $R_1$, $R_2$, and $R_U$ in the case of a wavelength of 480 nm (where, n=3.43 and k=0.17 at a time of the wavelength = 480 nm);
Fig.18A is a characteristic graph indicating $R_1$, $R_2$, and $R_U$ in the case of a wavelength of 635 nm (where, n=3.08 and k=0.15 at a time of the wavelength = 635 nm);
Fig.18B is a characteristic graph indicating $R_1$, $R_2$, and $R_U$ in the case of a wavelength of 480 nm (where, n=3.38 and k=0.27 at a time of the wavelength = 480 nm);
Fig.19A is a characteristic graph indicating $R_1$, $R_2$, and $R_U$ in the case of a wavelength of 635 nm (where, n=3.21 and k=0.11 at a time of the wavelength = 635 nm);
Fig.19B is a characteristic graph indicating $R_1$, $R_2$, and $R_U$ in the case of a wavelength of 480 nm (where, n=3.42 and k=0.26 at a time of the wavelength = 480 nm);
Fig.20A is a characteristic graph indicating $R_1$, $R_2$, and $R_U$ in the case of a wavelength of 635 nm (where, n=3.08 and k=0.18 at a time of the wavelength = 635 nm);
Fig.20B is a characteristic graph indicating $R_1$, $R_2$, and $R_U$ in the case of a wavelength of 480 nm (where, n=3.4 and k=0.3 at a time of the wavelength = 480 nm);
Fig.21A is a characteristic graph indicating $R_1$, $R_2$, and $R_U$ in the case of a wavelength of 635 nm (where, n=3.05 and k=0.12 at a time of the wavelength = 635 nm);
Fig.21B is a characteristic graph indicating $R_1$, $R_2$, and $R_U$ in the case of a wavelength of 480 nm (where, n=3.33 and k=0.25 at a time of the wavelength = 480 nm);
Fig.22A is a characteristic graph indicating $R_1$, $R_2$, and $R_U$ in the case of a wavelength of 635 nm (where, n=2.90 and k=0.16 at a time of the wavelength = 635 nm);
Fig.22B is a characteristic graph indicating $R_1$, $R_2$, and $R_U$ in the case of a wavelength of 480 nm (where, n=3.25 and k=0.29 at a time of the wavelength = 480 nm);
Fig.23A is a characteristic graph indicating $R_1$, $R_2$, and $R_U$ in the case of a wavelength of 635 nm (where, n=3.10 and k=0.14 at a time of the wavelength = 635 nm);
Fig.23B is a characteristic graph indicating $R_1$, $R_2$, and $R_U$ in the case of a wavelength of 480 nm (where, n=3.35 and k=0.26 at a time of the wavelength = 480 nm);
Fig.24A is a characteristic graph indicating $R_1$, $R_2$, and $R_U$ in the case of a wavelength of 635 nm (where, n=2.85 and k=0.22 at a time of the wavelength = 635 nm);
Fig.24B is a characteristic graph indicating $R_1$, $R_2$, and $R_U$ in the case of a wavelength of 480 nm (where, n=3.15 and k=0.35 at a time of the wavelength = 480 nm);
Fig.25A is a characteristic graph indicating $R_1$, $R_2$, and $R_U$ in the case of a wavelength of 635 nm (where, n=3.17 and k=0.145 at a time of the wavelength = 635 nm);
Fig.25B is a characteristic graph indicating $R_1$, $R_2$, and $R_U$ in the case of a wavelength of 480 nm (where, n=3.45 and k=0.3 at a time of the wavelength = 480 nm);

## DESCRIPTION OF THE PREFERRED EMBODIMENTS

Next, an actual configuration example of a multi-layer optical disk to which the present invention is applied will be explained in detail with reference to the drawings. As shown in Fig.2, the multi-layer optical disk in accordance with the present invention is constituted in such a way that a first information memory layer 2 dedicated to reproduce, a spacer layer 3 and a second information memory layer 4 dedicated to reproduce are sequentially film-formed on a substrate 1. Further, a protective layer 5 made of ultraviolet light curing resin and the like is formed so as to cover them.

The substrate 1 may be made of glass or high polymer plastic, such as poly-carbonate and the like. A first pattern of information is recorded using concave and convex pits, by means of a 2P (photo polymerization) method and the like in the case of a glass substrate, or by an injection molding method and the like in the case of a high polymer plastic such as poly-carbonate and the like.

The first information memory layer 2 is film-formed on the concave and convex pits of the substrate 1 with a predetermined film thickness by using a vacuum evaporation method, or a sputtering method and the like, and is defined as a dedicated reproduction layer.

Further, the spacer layer 3 is formed thereon. It is desired that the spacer layer 3 should have a thickness equal to or more than 30 μm. Thus, the spacer layer 3 is formed, for example, by coating with ultraviolet light curing resin by means of a spin coating method.

And, a second pattern of information is recorded on a surface of the spacer layer 3 as concave and convex pits, for example, by using the 2P method and the like. Further, the second information memory layer 4 is film-formed thereon. In this embodiment, since the second information memory layer 4 is also defined as a dedicated reproduction layer, an aluminum film with a thickness of 100 nm is film-formed. Other materials can be used as configuration material of the second information layer 4, if it has a sufficient reflectivity in the wavelength region to be used. Further, the film thickness is not limited to 100 nm. Further, a recording function can be added as the second information layer 4 by using a rewritable material represented by a magneto-optic material, a phase changeable material and the like or a write once type material.

Various information memory layers are formed by using the laminating technique in this embodiment. It is also possible, for example, to stick together two sheets of the substrate on which the various information layers are formed, to thereby define the multi-layer optical disk.

Fig.3 shows a multi-layer optical disk in which two sheets of the substrate are stuck to each other. A first pattern of information and a second pattern of information are respectively recorded as concave and convex pits on a first substrate 11 and a second substrate 12 made of high polymer plastic, such as glass, or poly-carbonate and the like, by means of injection molding and the like.

A translucent film, such as SiN, $SiO_2$ and the like, is formed on the concave and convex pits of the first substrate by means of evaporation, sputtering and the like, and thereby the first information memory layer 12 is formed.

An A1 evaporation film is formed on the concave and convex pits of the second substrate, and thereby the second information memory layer 14 is formed.

The first substrate 11 on which the first information memory layer 12 is formed and the second substrate 13 on which the second information memory layer 14 is formed are joined to each other through a transparent layer 15. The transparent layer 15 is cured, for example, by putting an ultraviolet light curing type of transparent resin, which is a photo-curing type of transparent resin, between both the substrates, and by compressing both of them and irradiating ultraviolet light from a side of the first transparent substrate 11.

In the multi-layer optical disk having the above-mentioned configuration, in order to read out the information of the two information memory layers from a surface of one information memory layer, it is necessary that signals from the first information memory layer 2 and the second information memory layer 4 should be sufficiently large when read light is irradiated from the surface of one information layer. In other words, this means that a reflectivity $R_1$ of the first information memory layer 2 and a reflectivity $R_2$ of the second information memory layer 4 shown in Fig.4 should be sufficiently large. It is desirable that the reflectivity be 20 % or more and 40 % or less to obtain a correct reproduction signal.

Since it is necessary to adjust the signal levels and make them uniform at a time of reproducing the signals and the circuit configuration becomes complicated, it is undesirable that the signal level from the first information memory layer 2 be greatly different from the signal level from the second information memory layer 4.

As a result, it is necessary that a difference between the reflectivity $R_1$ of the first information memory layer 2 and the reflectivity $R_2$ of the second information memory layer 4 be small. For example, in a case of setting $R_U$ represented by a following formula, it is desirable that a value of $R_U$ is 0.2 or less in order to obtain the correct reproduction signal.

$$R_u = 2 \times \left|\frac{R_1 - R_2}{R_1 + R_2}\right|$$

The inventors of the present invention paid attention to the material used in the first information memory layer 2 (which is assumed to have much influence on the above-mentioned performance) in order to develop a multi-layer optical disk which meets the above conditions in both cases of the wavelengths of 635 nm and 480 nm. They examined various materials having different values of refractive index n and extinction coefficient k, and came to the conclusion described below.

(1) The values of refractive index n and extinction coefficient k which meet the conditions necessary to provide a multi-layer optical disk adapted for reproduction at both the wavelengths of 635 nm and 480 nm are limited. They are $n = \alpha - k + 2.8$ ($\alpha$ is a constant) at the wavelength of 635 nm. However, this is limited to an area indicated by $0.15 \leq \alpha \leq 0.45$ and $0 \leq k \leq 0.25$ (refer to Fig.1).

However, when considering an allowable film thickness range, the range $0.25 \leq \alpha \leq 0.35$ is more desirable.

(2) It is desirable that the amounts of change of the refractive index n and the extinction coefficient k should be small at both the wavelengths. Especially, it is desirable that the amount of change $\Delta k$ of the extinction coefficient k be 0.3 or less.

Incidentally, values of the refractive index n and the extinction coefficient k of the material depend on conditions during fabrication (the conditions for film-forming, such as gas pressure at a time of sputtering, the spattering speed and the like). The values can also be adjusted by adding another element.

There are several materials which can meet the above-mentioned conditions at the wavelength of 635 nm. Table 1 below shows the refractive indexes n and the extinction coefficients k, at the wavelengths of 635 nm and 480 nm, of the material, when copper oxide (Cu-O), silicon (Si), silicon nitride (Si-N), hydrogen-addition silicon nitride (Si-N-H) or hydrogen addition silicon oxide (Si-O-H) are used as the first information memory layer in a multi-layer optical disk adapted for use with a read light beam wavelength of 635 nm, and the values of the reflectivity $R_1$, $R_2$ and $R_U$ when constituting the multi-layer optical disk having the above-mentioned construction.

Table 1

| Material | Film Thickness (nm) | 635nm | | | | |
|---|---|---|---|---|---|---|
| | | n | k | $R_1$ | $R_2$ | $R_U$ |
| Cu-O | 58 | 2.98 | 0.11 | 30 | 32 | 0.06 |
| Si | 15 | 4.20 | 0.40 | 27 | 27 | 0 |
| Si-N | 60 | 2.95 | 0.16 | 28 | 30 | 0.07 |
| Si-O-H | 51 | 3.01 | 0.02 | 34 | 36 | 0.08 |
| Si-N-H(1) | 54 | 3.01 | 0.04 | 33 | 34 | 0.05 |
| Si-N-H(2) | 50 | 3.05 | 0.02 | 35 | 35 | 0.01 |

Table 1-continued

| Material | 480nm | | | | | Δk |
|---|---|---|---|---|---|---|
| | n | k | $R_1$ | $R_2$ | $R_U$ | |
| Cu-O | 3.10 | 0.44 | 16 | 16 | 0.01 | 0.33 |
| Si | 4.49 | 1.28 | 36 | 7 | 1< | 0.08 |
| Si-N | 3.00 | 0.51 | 13 | 12 | 0.08 | 0.35 |
| Si-O-H | 3.42 | 0.22 | 25 | 25 | 0.01 | 0.20 |
| Si-N-H(1) | 3.30 | 0.34 | 20 | 20 | 0.01 | 0.30 |
| Si-N-H(2) | 3.35 | 0.16 | 28 | 28 | 0.01 | 0.14 |

All of the materials indicated in Table 1 can sufficiently obtain the reflectivity for the first information memory layer 2 and the second information memory layer 4 at the wavelength of 635 nm. Further, a difference between the reflectivity of the first information memory layer 2 and that of the second information memory layer 4 is sufficiently small. That is, it is understood that if using the materials described in Table 1, the multi-layer optical disk can be constituted for the read light beam wavelength of 635 nm.

However, when the same materials are used at the same film thickness, a correct signal performance is not always obtained and some of the above-mentioned conditions are not met, in the case of using a read light beam wavelength of 480 nm.

For example, in the case of using copper oxide, when using the wavelength of 635 nm, $R_1$ is 30 %, $R_2$ is 32 % and $R_U$ is 0.06, which are sufficiently small. Thus, it is possible to construct a multi-layer optical disk usable at this wavelength. On the other hand, although the reflectivity of both the information memory layers are uniform in the wavelength region of 480 nm, both of them are 16 %, which is low. As a result, this material is not suitable for the multi-layer optical disk to be read using a read light beam wavelength of 480 nm.

In the case of using Si, the multi-layer optical disk can be constructed for use in a wavelength region of 635 nm. However, in the case of using the same configuration of Si, at the wavelength of 480 nm, the difference between the reflectivity of the information memory layers becomes large. Thus, it is found that this material is not suitable for the multi-layer optical disk.

In contrast with this, both of the hydrogen addition silicon oxide (Si-O-H) and the hydrogen addition silicon nitride (Si-N-H; the amounts of the added hydrogen are different from each other in (1) and (2) of the table) comply with the requirements for the multi-layer optical disk at both the wavelengths of 635 nm and 480 nm. Further, an optical disk having a large capacity is completed which can process both the information in the first information memory layer 2 and the second information memory layer 4, and the compatibility can be ensured under the two types of the wavelengths.

Next, in the case of the hydrogen addition silicon nitride, the amount of the added hydrogen, the film forming condition and the like were changed to produce multi-layer disks in which the film-formed first information memory layers 2 had various different values of refractive index n and extinction coefficient k, so that the dependencies of $R_1$, $R_2$ and $R_U$ on the thickness of the first information memory layer could be measured at both the wavelengths of 635 nm and 480 nm.

The results are shown in Figs.5 to 25. The figure A in each figure indicates the results of the film thickness dependencies which were measured at the wavelength of 635 nm, and the figure B indicates the measured result at the wavelength of 480 nm. $R_U$ is represented by a solid line. $R_1$ is represented by a dotted line. $R_2$ is represented by a broken line. The horizontal axis in the graphs indicates the film thickness (nm) of the layer, and the vertical axis indicates the reflectivity with respect to $R_1$ and $R_2$, and the ratio on the basis of $R_1$ and $R_2$ with respect to $R_U$. Incidentally, the figure B has been omitted in the cases where there is no film thickness area in which $R_U$ complies with the value equal to or less than 0.2 at the wavelength of 635 nm.

The measurements shown in Fig.5 to 25 were conducted under conditions corresponding to the respective points plotted in Fig.1. That is, for the points (plotted by the refractive index n and the extinction coefficient k) which lie within the slant line area shown in Fig.1, a film thickness range of the first information memory layer exists such that the following requirements are all satisfied: that the reflection coefficient $R_1$ of the first information memory layer 2 is equal to or more than 20 %, the reflection coefficient $R_2$ of the second information memory layer 4 is equal to or more than 20 % and $R_U$ is equal to or less than 0.2, with respect to read light beams having wavelengths of 635 nm and 480 nm.

As a result, it is possible to constitute the multi-layer optical disk compatible with the two wavelengths of 635 nm and 480 nm.

On the other hand, in a sample departing from the slant line area in Fig.1, the above-mentioned film thickness ranges do not overlap with respect to the read light beams having the wavelengths of 635 nm and 480 nm. Thus, it is not possible to implement the multi-layer optical disk having the two wavelength compatibility.

In any samples, a condition in which the compatibility with the two wavelengths can be provided is limited to the case in which the film thickness of the first information memory layer 2 is close to 50 nm. For this reason, it is understood that the thickness of the first information memory layer 2 is desirably to be within a range from 40 nm to 60 nm.

Many widely different embodiments of the present invention may be constructed without departing from the present invention. It should be understood that the present invention is not limited to the specific embodiments described in the specification, except as defined in the appended claims.

## Claims

1. Multi-layer optical disk, in which a first information memory layer (2) and a second information memory layer (4) are sequentially film-formed on a substrate (1) and information recorded on the first information memory layer and the second information memory layer is reproduced by irradiating read light from the substrate side,

   **characterized in that** the first information memory layer (2) is made of material for which the refractive index n and the extinction coefficient k at a first wavelength between 630 nm and 690 nm comply with the following conditions:

$$0 \leq k \leq 0.25$$

$$n = \alpha - k + 2.8$$

   (where $\alpha$ is a constant and $0.15 \leq \alpha \leq 0.45$),

   said material being a Si-system material having hydrogen and at least one of nitride and oxygen, so that said first information memory layer (2) and said second information memory layer (4) can be reproduced by a first read light beam having said first wavelength and a second read light beam having a second wavelength which is shorter than the first wavelength.

2. Multi-layer optical disk according to Claim 1, wherein a difference $\Delta k$ between an extinction coefficient at the first wavelength of the first information memory layer (2) and an extinction coefficient at the second wavelength between 450 nm and 630 nm is 0.3 or less.

3. Multi-layer optical disk according to Claim 1 or 2, wherein said first wavelength is 635 nm.

4. Multi-layer optical disk according to any one of Claims 1 to 3, wherein said second wavelength is 480 nm.

5. Multi-layer optical disk according to any one of Claims 1 to 4, wherein a film thickness of the first information memory layer (2) is between 40 nm and 60 nm.

6. M ulti-layer optical disk according to any one of Claims 1 to 5, wherein a spacer layer (3) is formed between the first information memory layer (2) and the second information memory layer (4).

## Patentansprüche

1. Optische Mehrlagenplatte, bei der eine erste Informationsspeicherschicht (2) und eine zweite Informationsspeicherschicht (4) nacheinander auf einem Substrat (1) als Film ausgebildet sind und auf der ersten Informationsspeicherschicht und der zweiten Informationsspeicherschicht aufgezeichnete Informationen durch Bestrahlen mit einem Leselicht von der Substratseite wiedergegeben werden,

   **dadurch gekennzeichnet,**

   **dass** die erste Informationsspeicherschicht (2) aus einem Material gefertigt ist, für das der Brechungsindex n und der Extinktionskoeffizient k bei einer ersten Wellenlänge zwischen 630 nm und 690 nm den folgenden Bedingungen genügen:

$$0 \leq k \leq 0,25$$

$$n = \alpha - k + 2,8$$

   (wobei $\alpha$ eine Konstante mit $0,15 \leq \alpha \leq 0,45$ ist),

   wobei das Material ein Material des Si-Systems mit Wasserstoff und Nitrid und/oder Sauerstoff ist, so dass die erste Informationsspeicherschicht (2) und die zweite Informationsspeicherschicht (4) durch einen ersten Leselichtstrahl mit der ersten Wellenlänge und einen zweiten Leselichtstrahl mit einer zweiten Wellenlänge, die kürzer als die erste Wellenlänge ist, wiedergegeben werden können.

2. Optische Mehrlagenplatte nach Anspruch 1, wobei eine Differenz Δk zwischen einem Extinktionskoeffizienten der ersten Informationsspeicherschicht (2) bei der ersten Wellenlänge und einem Extinktionskoeffizienten bei der zweiten Wellenlänge zwischen 450 nm und 630 nm kleiner als 0,3 ist.

3. Optische Mehrlagenplatte nach Anspruch 1 oder 2, wobei die erste Wellenlänge 635 nm beträgt.

4. Optische Mehrlagenplatte nach einem der Ansprüche 1 bis 3, wobei die zweite Wellenlänge 480 nm beträgt.

5. Optische Mehrlagenplatte nach einem der Ansprüche 1 bis 4, wobei eine Filmdicke der ersten Informationsspeicherschicht (2) zwischen 40 nm und 60 nm beträgt.

6. Optische Mehrlagenplatte nach einem der Ansprüche 1 bis 5, wobei zwischen der ersten Informationsspeicherschicht (2) und der zweiten Informationsspeicherschicht (4) eine Abstandschicht (3) ausgebildet ist.

## Revendications

1. Disque optique multicouche, dans lequel une première couche de mémorisation d'informations (2) et une deuxième couche de mémorisation d'informations (4) sont successivement formées en pellicules sur un substrat (1) et les informations enregistrées sur la première couche de mémorisation d'informations et la deuxième couche de mémorisation d'informations sont reproduites par envoi d'un faisceau lumineux de lecture depuis le côté du substrat,

   **caractérisé en ce que** la première couche de mémorisation d'informations est faite en matériau pour lequel l'indice de réfraction n et le coefficient d'extinction k relatifs à une première longueur d'onde comprise entre 630 nm et 690 nm satisfont les conditions suivantes :

$$0 \le k \le 0,25$$

$$n = \alpha - k + 2,8$$

   (où $\alpha$ est une constante et $0,15 \le \alpha \le 0,45$),

   ledit matériau étant un matériau du système Si comportant de l'hydrogène et au moins un élément parmi le nitrure et l'oxygène, de sorte que ladite première couche de mémorisation d'informations (2) et ladite deuxième couche de mémorisation d'informations (4) peuvent être lues au moyen d'un premier faisceau lumineux de lecture ayant ladite première longueur d'onde et d'un deuxième faisceau lumineux de lecture ayant une deuxième longueur d'onde qui est plus courte que la première longueur d'onde.

2. Disque optique multicouche selon la revendication 1, où la différence Δk entre le coefficient d'extinction, pour la première longueur d'onde, de la première couche de mémorisation d'informations (2) et le coefficient d'extinction, pour la deuxième longueur d'onde, entre 450 nm et 630 nm, est de 0,3 ou moins.

3. Disque optique multicouche selon la revendication 1 ou 2, où ladite première longueur d'onde est 635 nm.

4. Disque optique multicouche selon l'une quelconque des revendications 1 à 3, où ladite deuxième longueur d'onde est 480 nm.

5. Disque optique multicouche selon l'une quelconque des revendications 1 à 4, où l'épaisseur de pellicule de la première couche de mémorisation d'informations (2) est comprise entre 40 nm et 60 nm.

6. Disque optique multicouche selon l'une quelconque des revendications 1 à 5, où une couche d'écartement (3) est formée entre la première couche de mémorisation d'informations (2) et la deuxième couche de mémorisation d'informations (4).

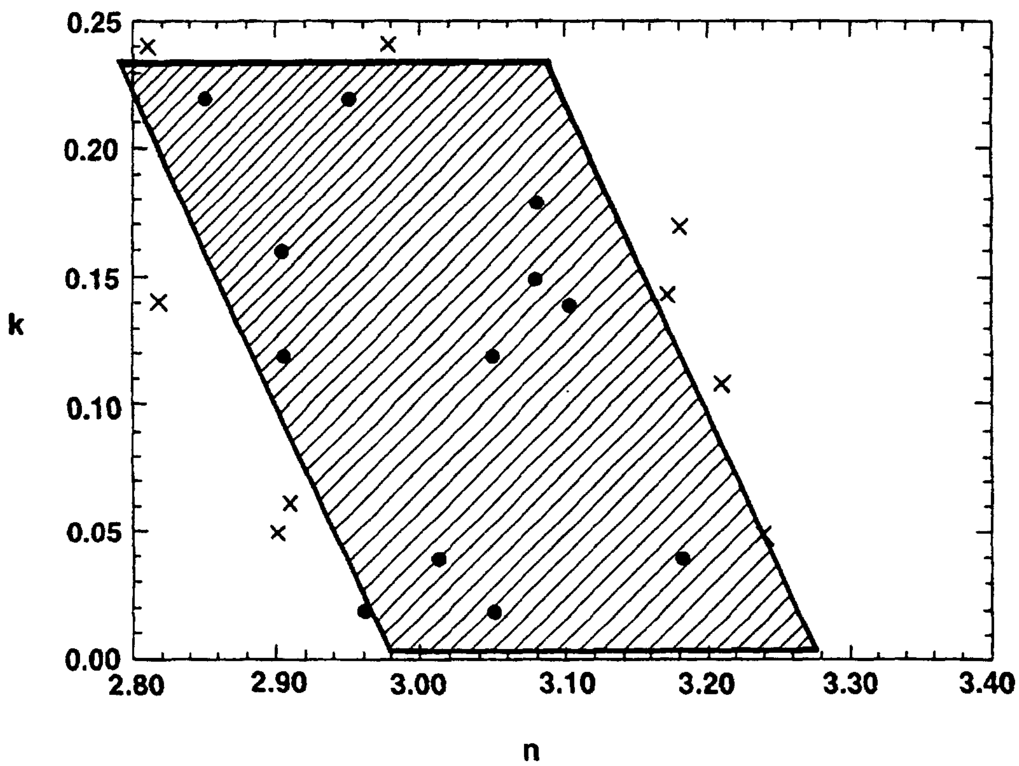


FIG.1

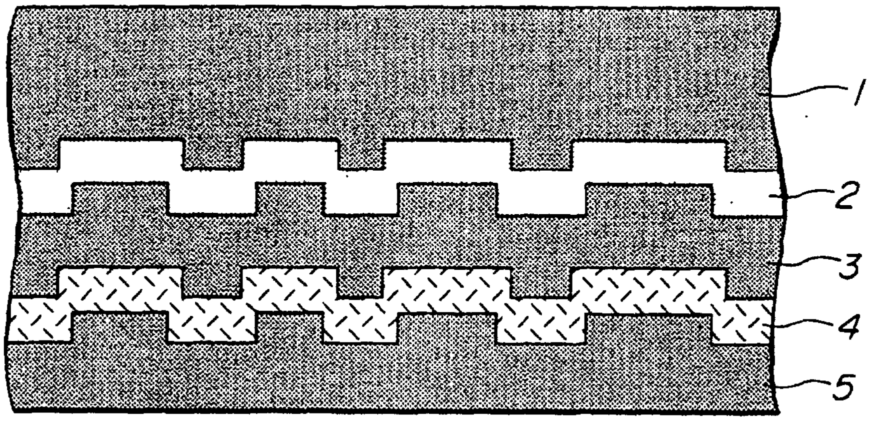


FIG.2

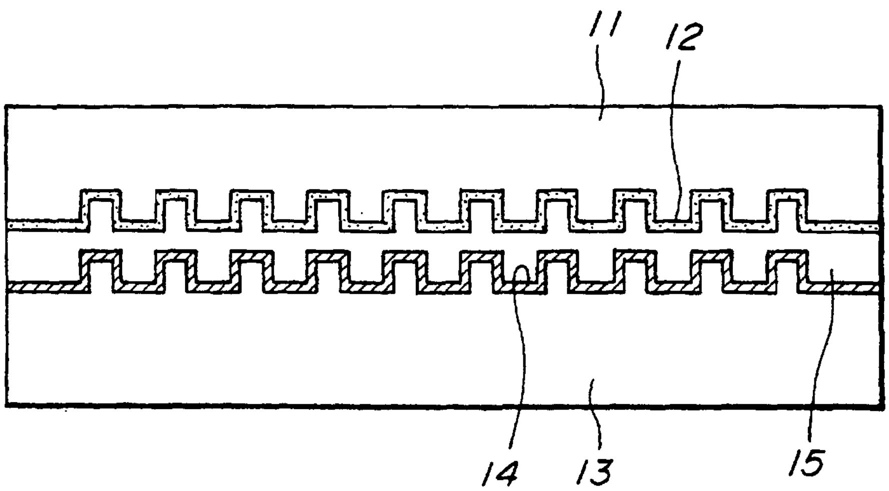


FIG.3

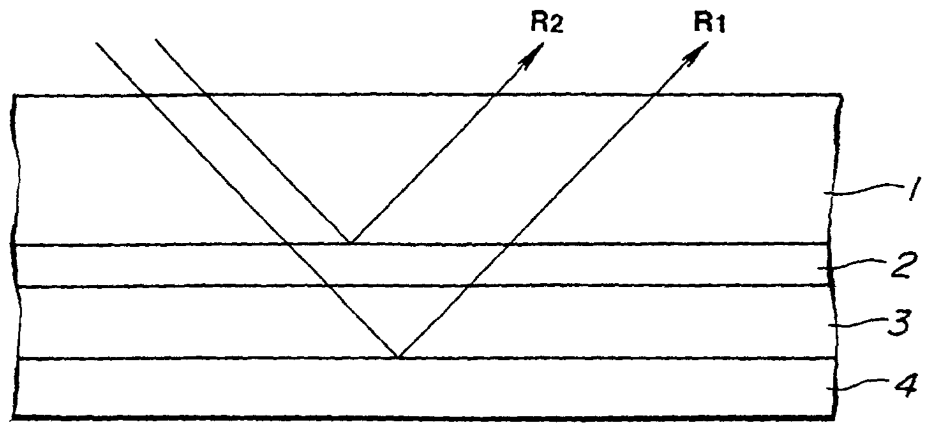


FIG.4

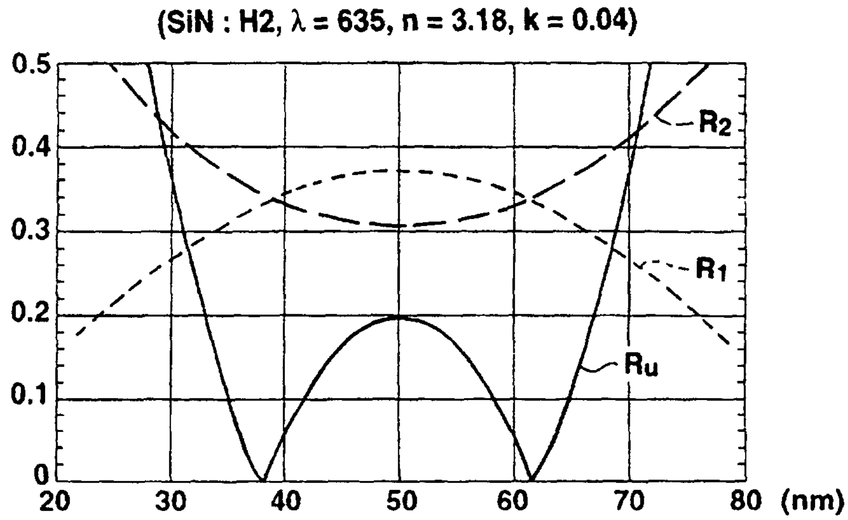
(SiN : H2, λ = 635, n = 3.18, k = 0.04)
0.5
0.4
0.3
0.2
0.1
0
20
30
40
50
60
70
80 (nm)
R2
R1
Ru

FIG.5A

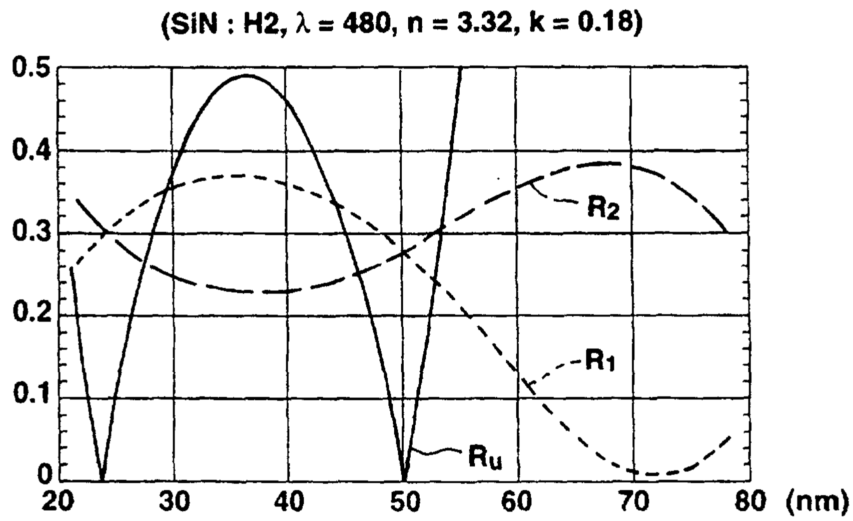
(SiN : H2, λ = 480, n = 3.32, k = 0.18)
0.5
0.4
0.3
0.2
0.1
0
20
30
40
50
60
70
80 (nm)
R2
R1
Ru

FIG.5B

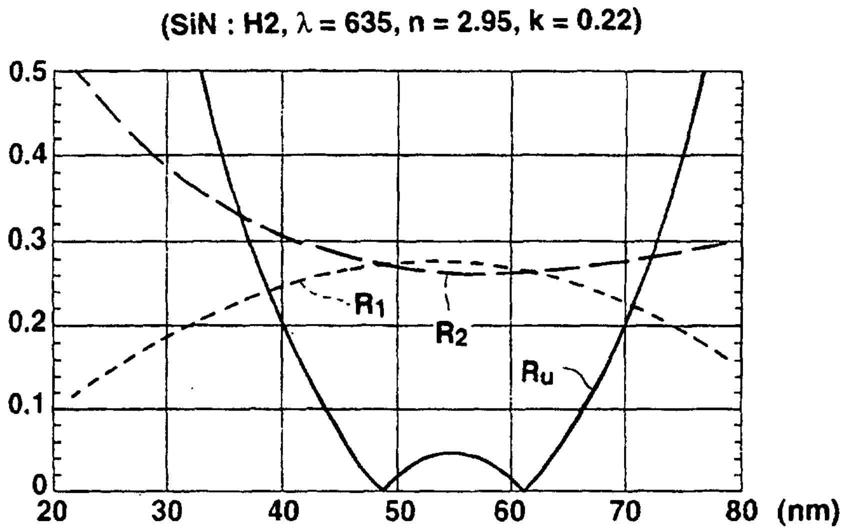
(SiN : H2, λ = 635, n = 2.95, k = 0.22)
0.5
0.4
0.3
0.2
0.1
0
20
30
40
50
60
70
80 (nm)
R1
R2
Ru

FIG.6A

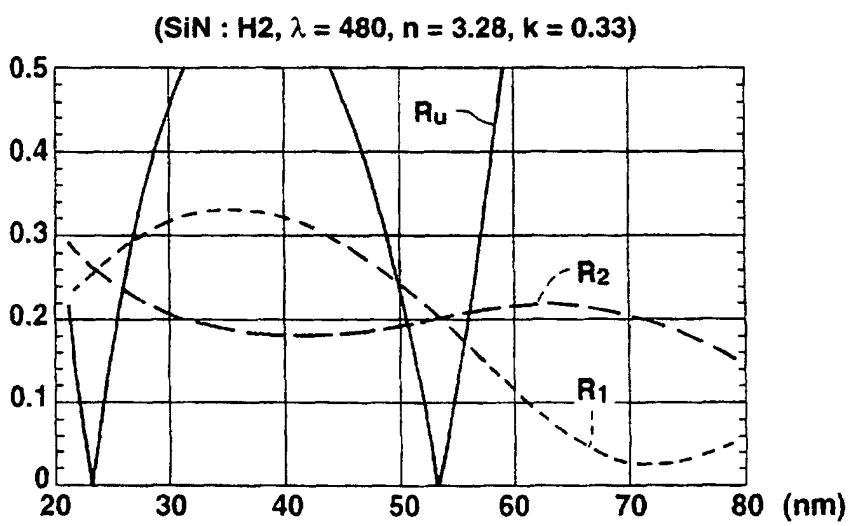
(SiN : H2, λ = 480, n = 3.28, k = 0.33)
0.5
0.4
0.3
0.2
0.1
0
20
30
40
50
60
70
80 (nm)
Ru
R2
R1

FIG.6B

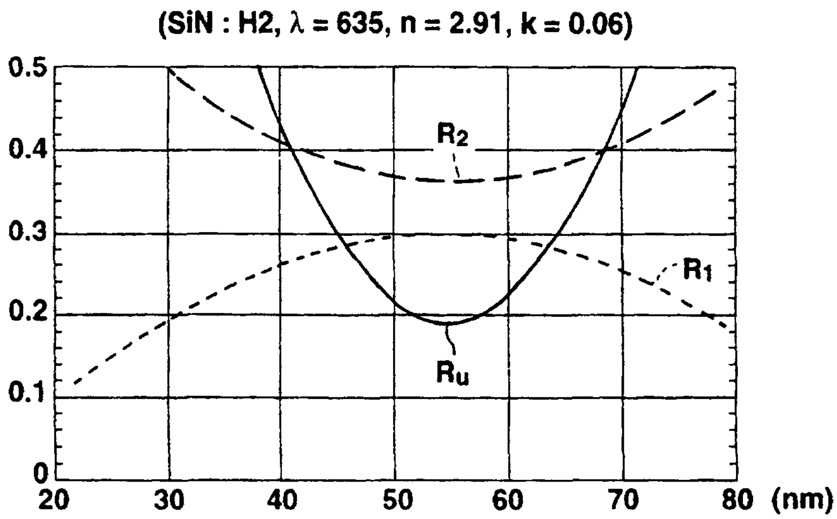
(SiN : H2, λ = 635, n = 2.91, k = 0.06)
0.5
0.4
0.3
0.2
0.1
0
20
30
40
50
60
70
80 (nm)
R2
R1
Ru

FIG.7A

(SiN : H2, λ = 635, n = 3.18, k = 0.17)

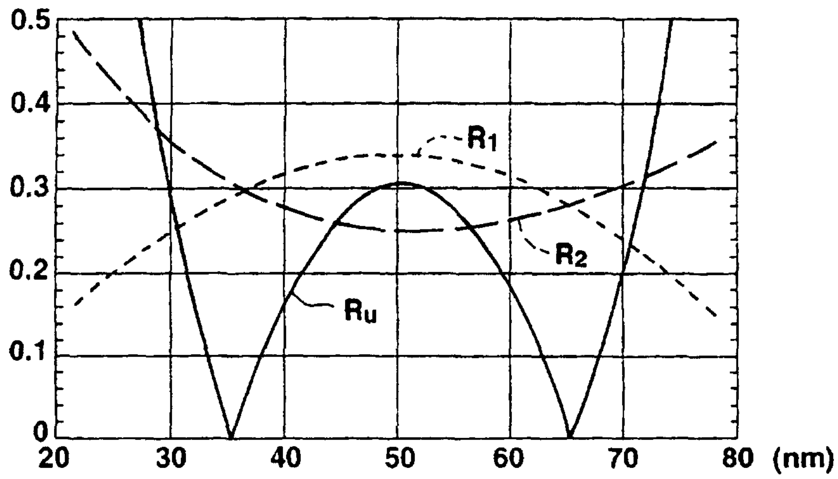


FIG.8A

(SiN : H2, λ = 480, n = 3.4, k = 0.26)

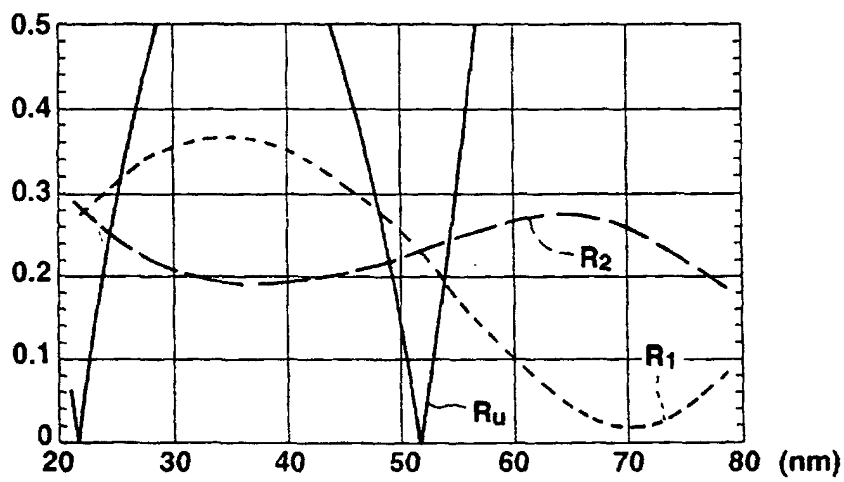


FIG.8B

(SiN : H2, λ = 635, n = 2.81, k = 0.24)

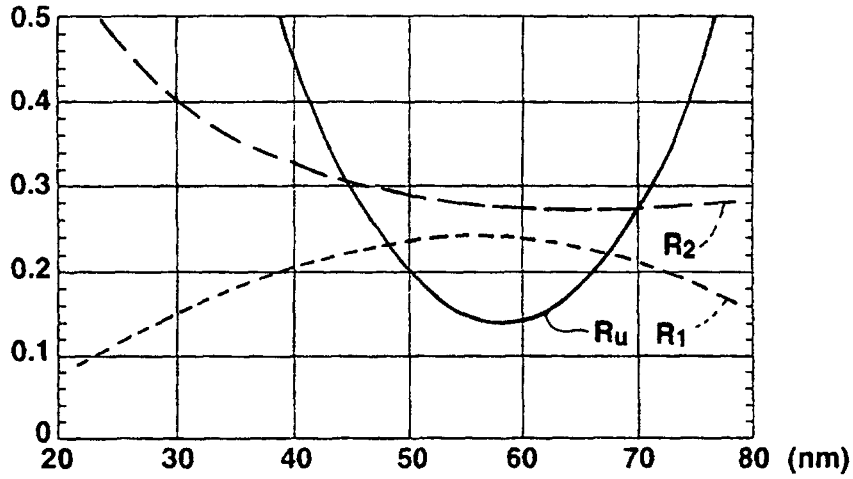


FIG.9A

(SiN : H2, λ = 480, n = 3.1, k = 0.43)

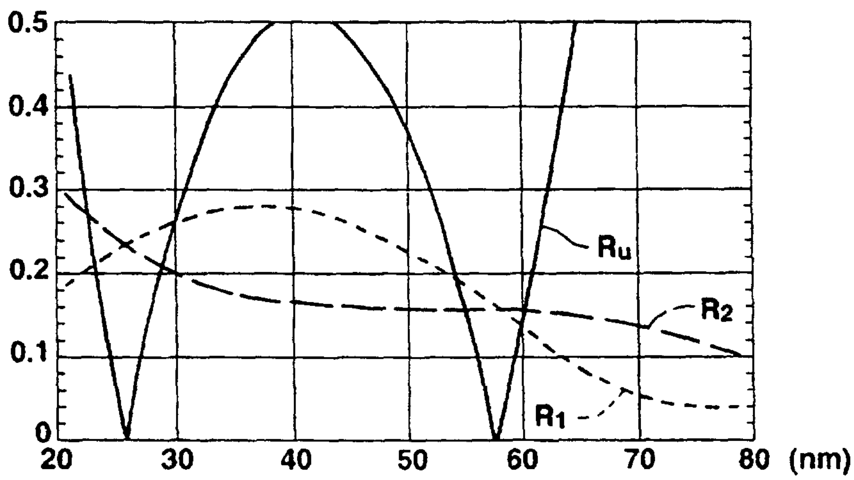


FIG.9B

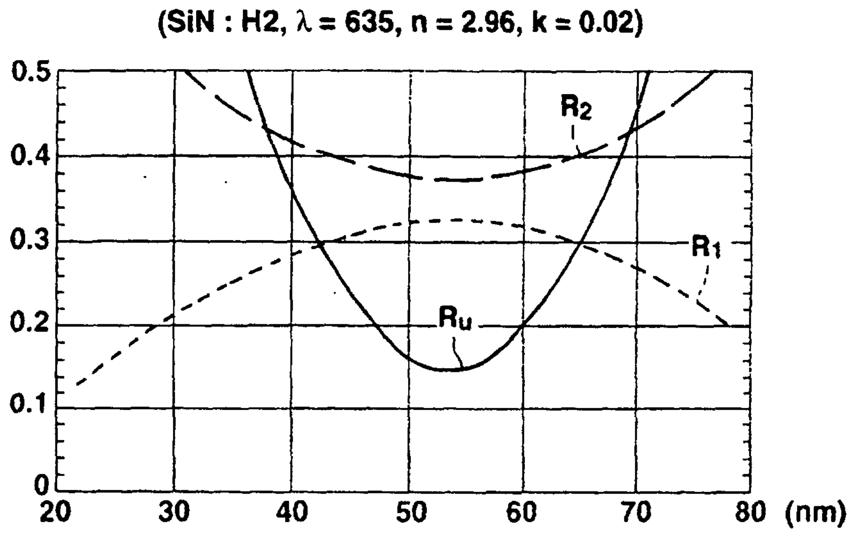


FIG.10A

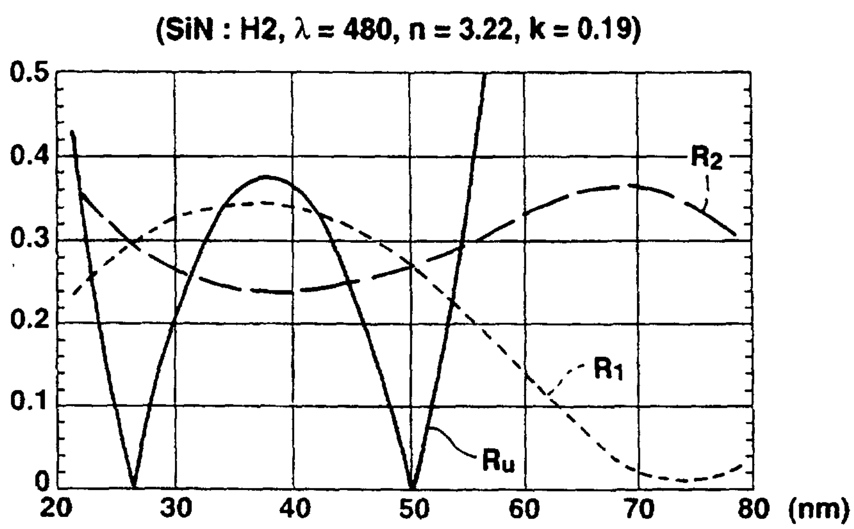


FIG.10B

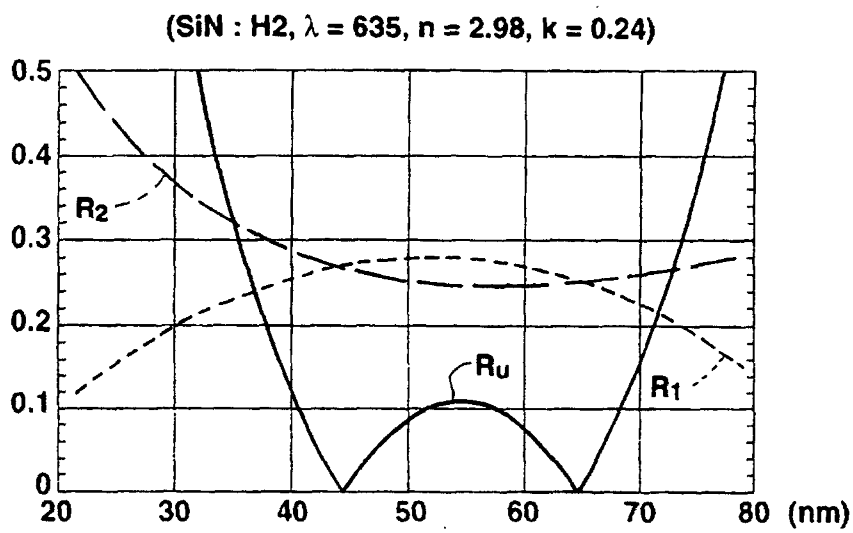


FIG.11A

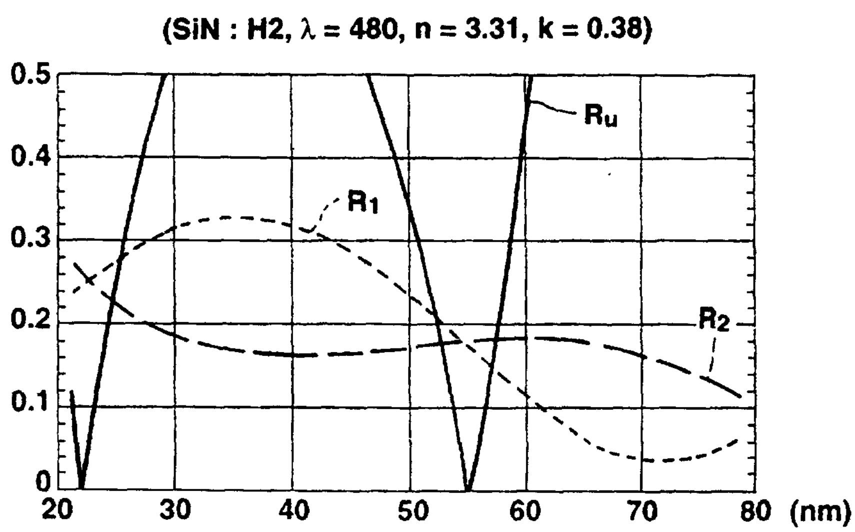


FIG.11B

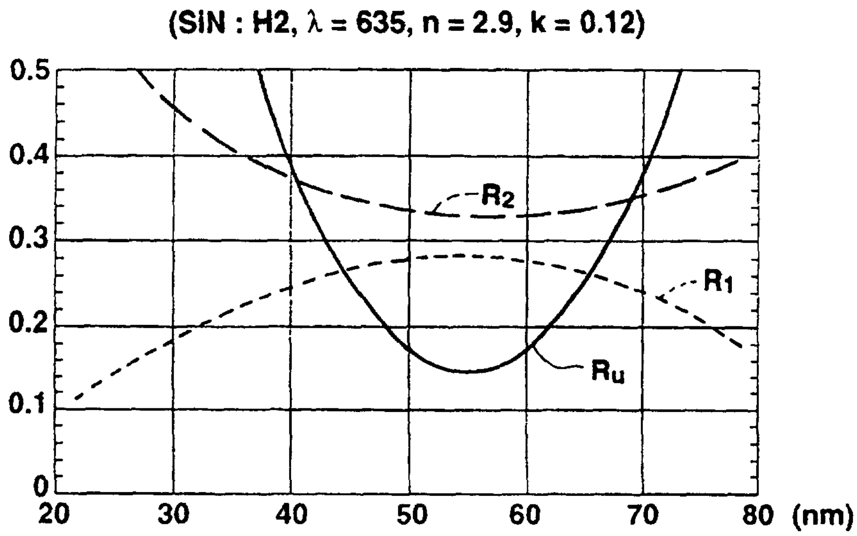


FIG.12A

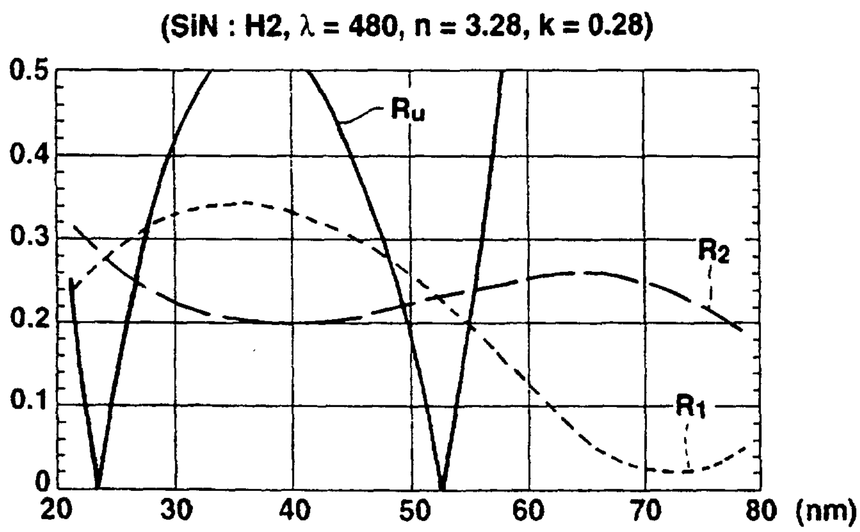


FIG.12B

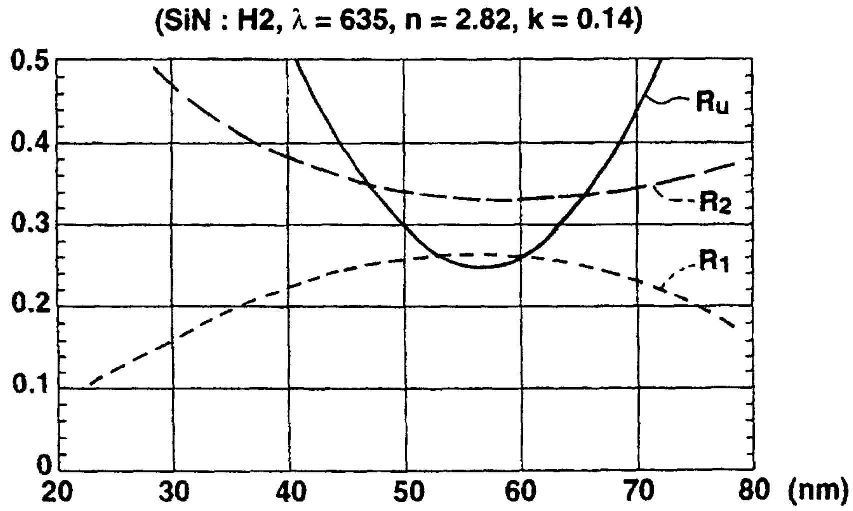
(SiN : H2, λ = 635, n = 2.82, k = 0.14)
0.5
0.4
0.3
0.2
0.1
0
20
30
40
50
60
70
80 (nm)
Ru
R2
R1

FIG.13A

(SiN : H2, λ = 635, n = 3.05, k = 0.02)

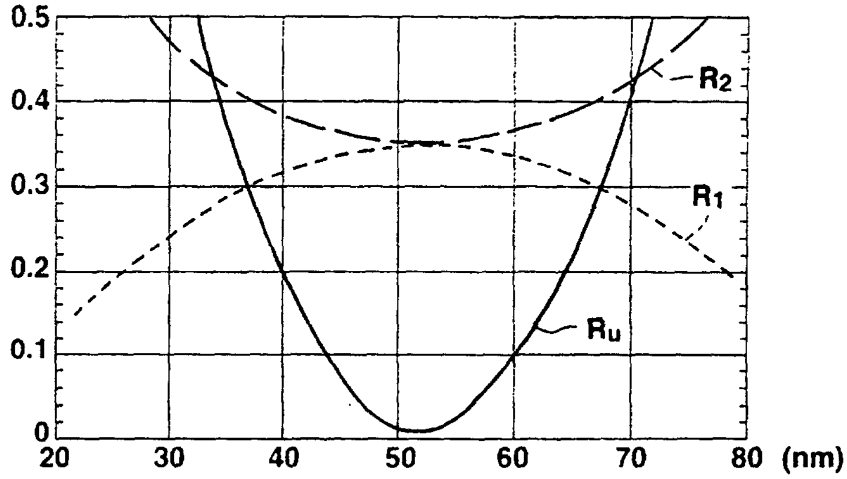


# FIG.14A

(SiN : H2, λ = 480, n = 3.35, k = 0.16)

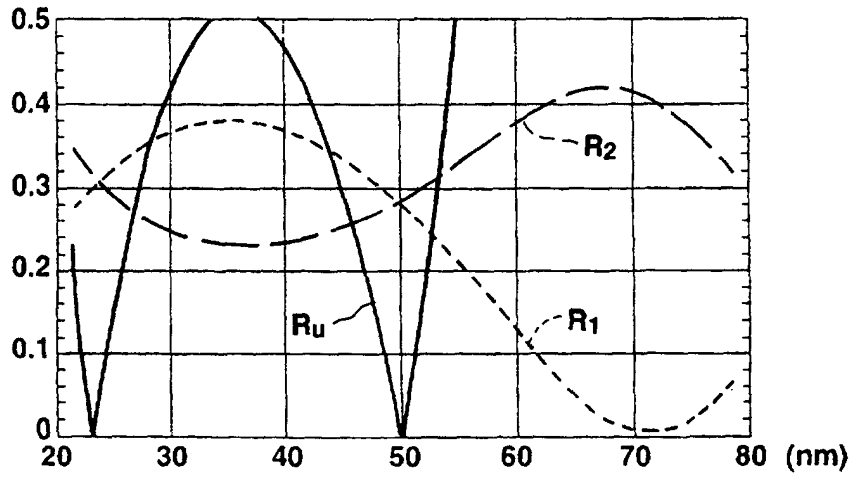


# FIG.14B

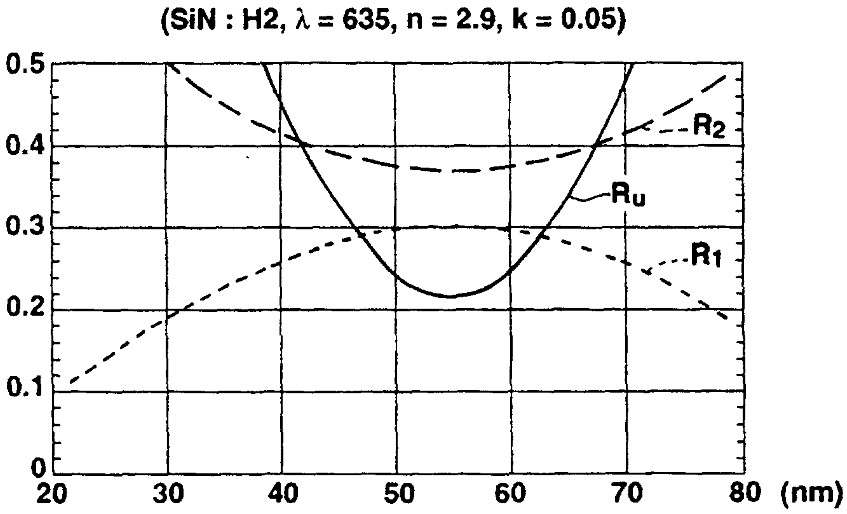


FIG.15A

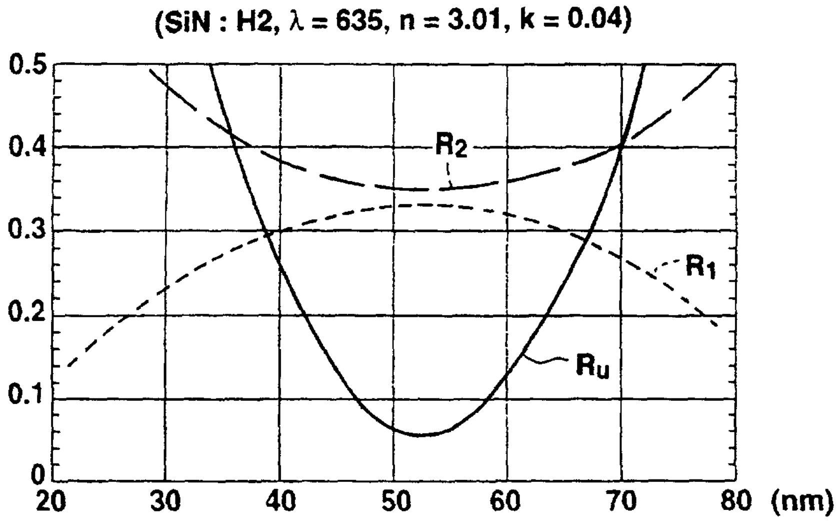


FIG.16A

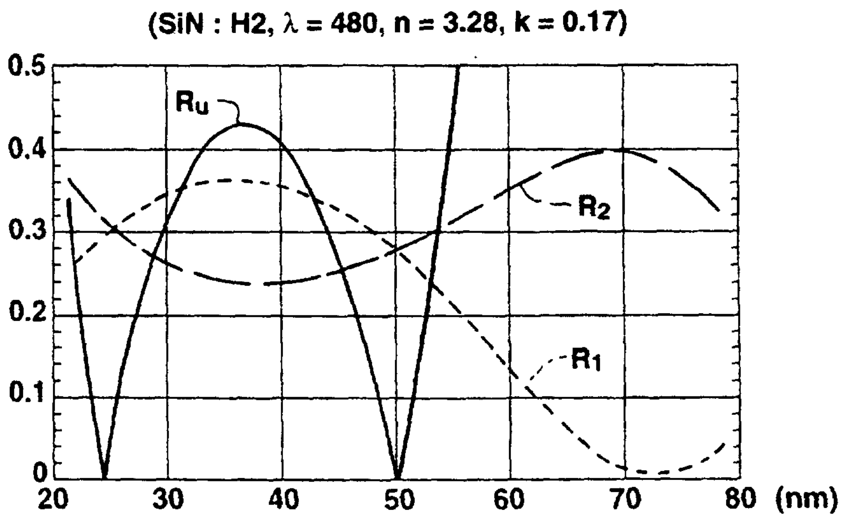


FIG.16B

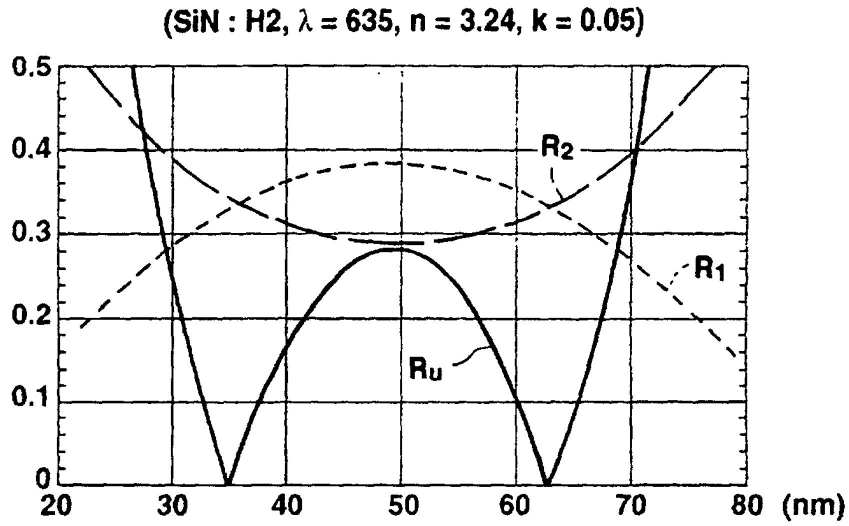


FIG.17A

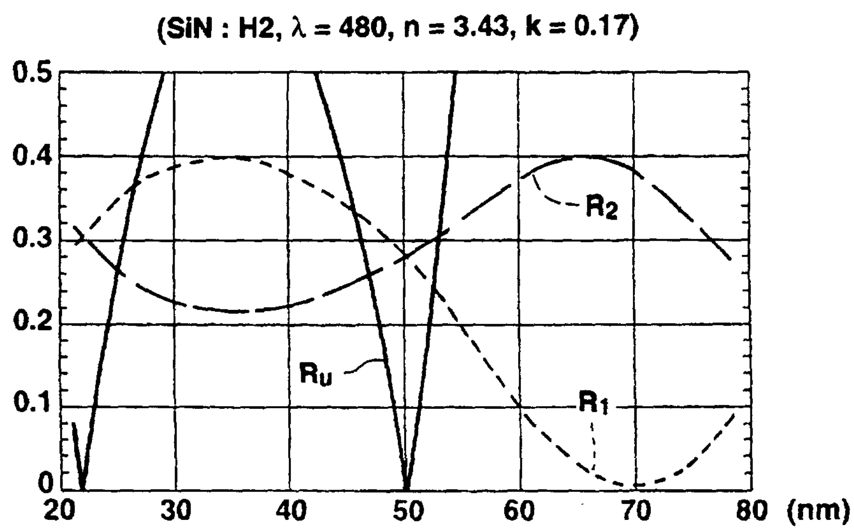


FIG.17B

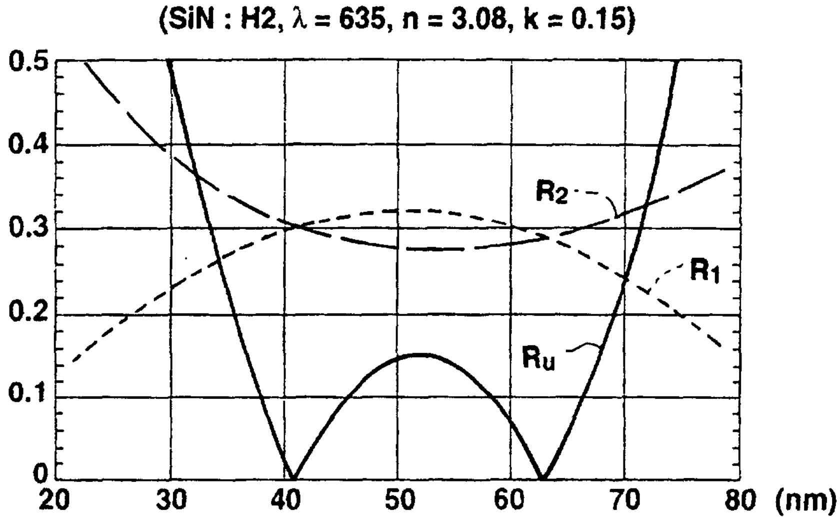


# FIG.18A

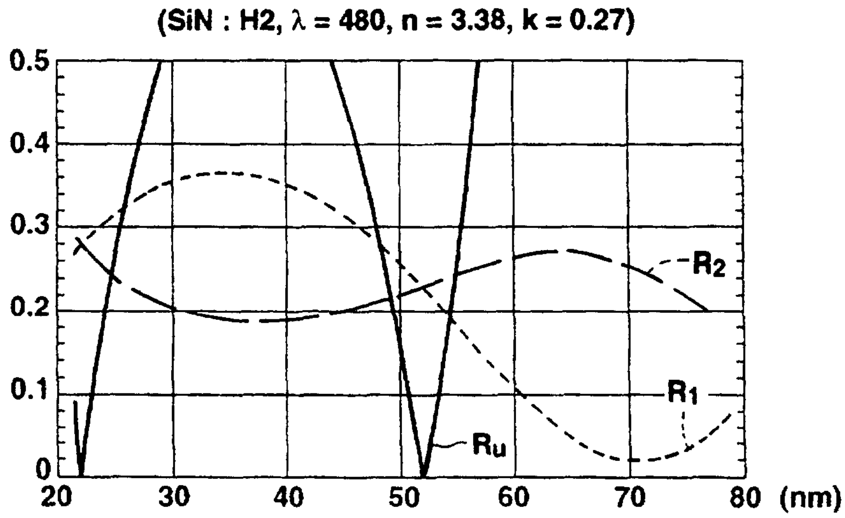


# FIG.18B

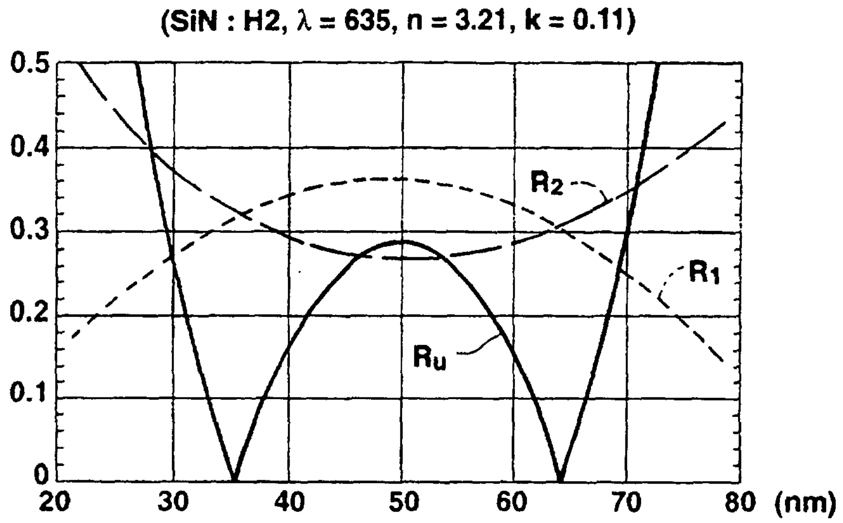


FIG.19A

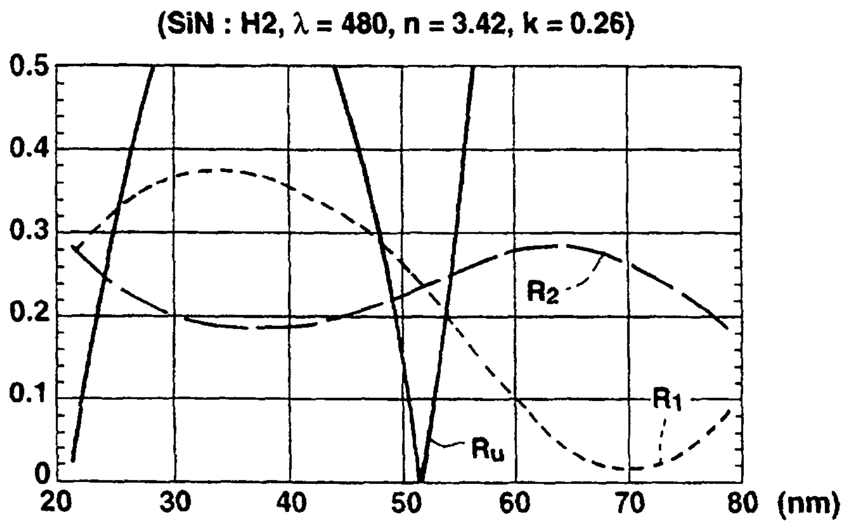


FIG.19B

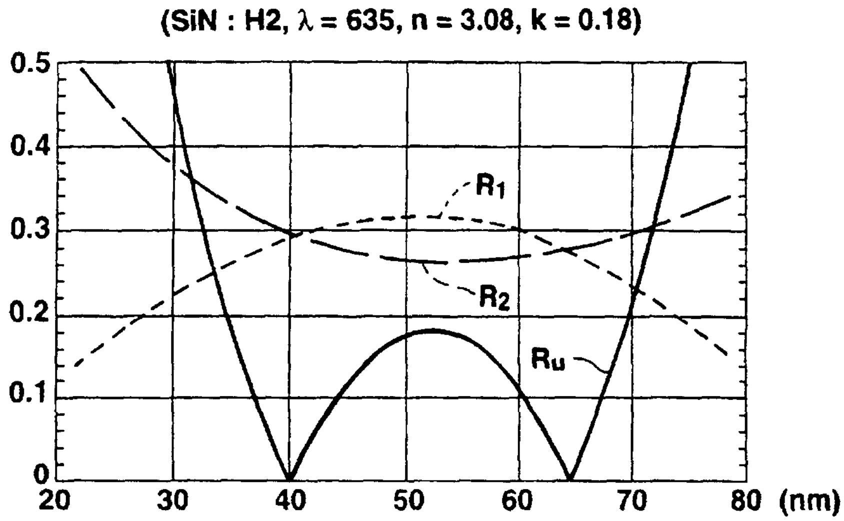


FIG.20A

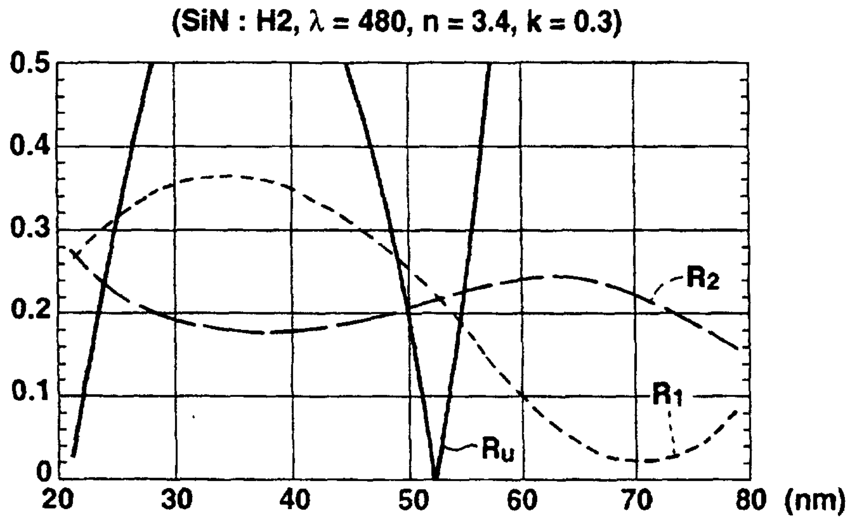


FIG.20B

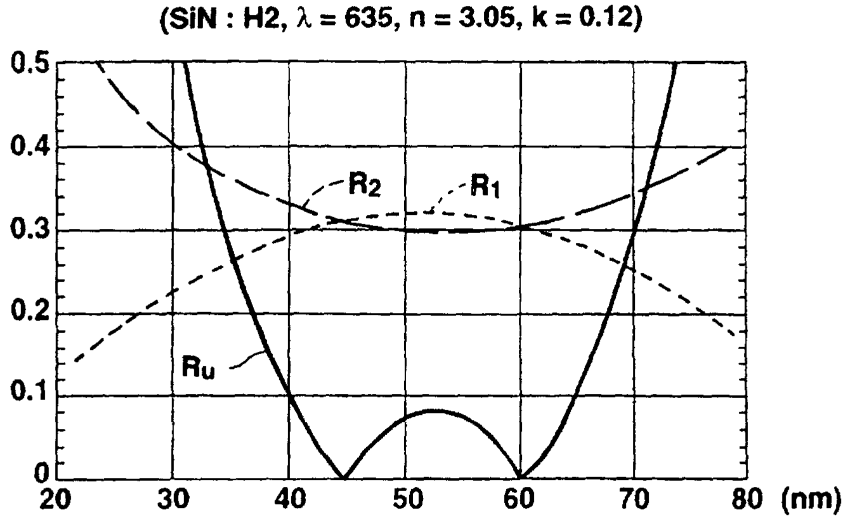


# FIG.21A

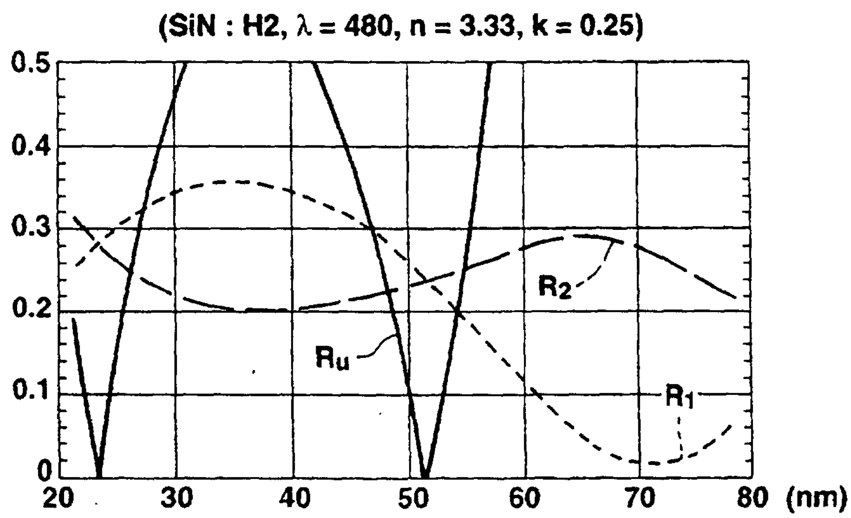


# FIG.21B

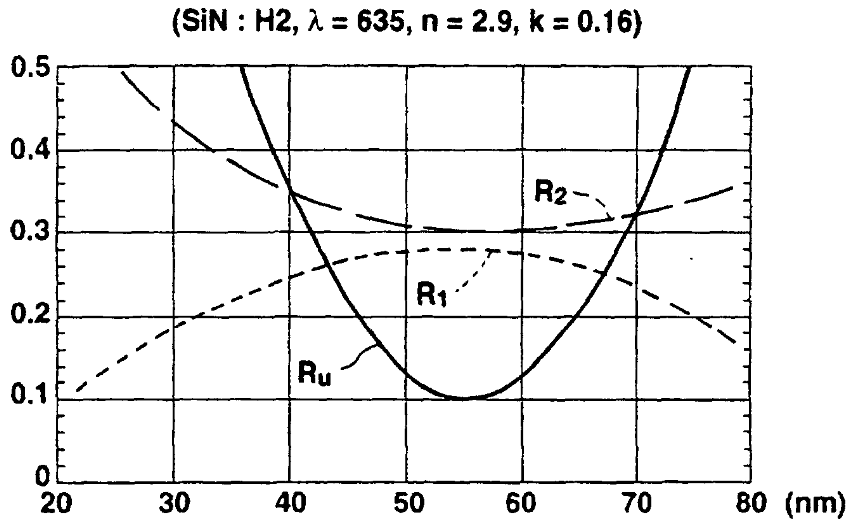


FIG.22A

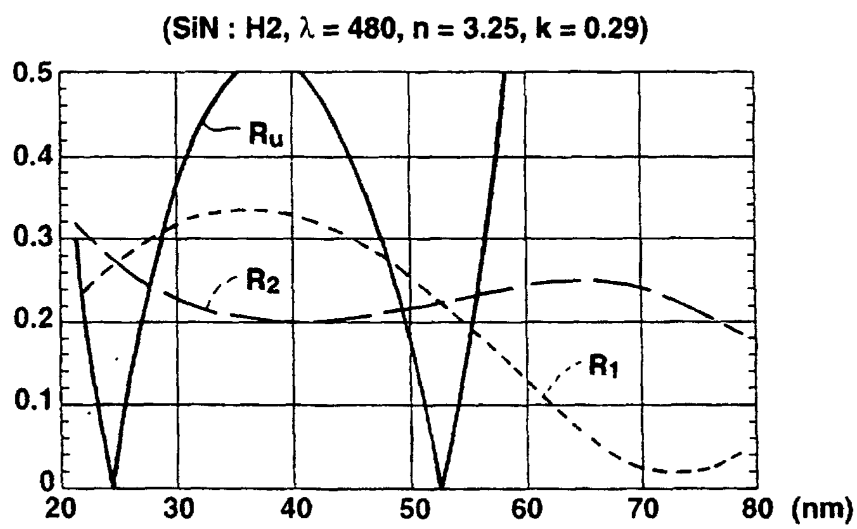


FIG.22B

(SiN : H2, λ = 635, n = 3.1, k = 0.14)

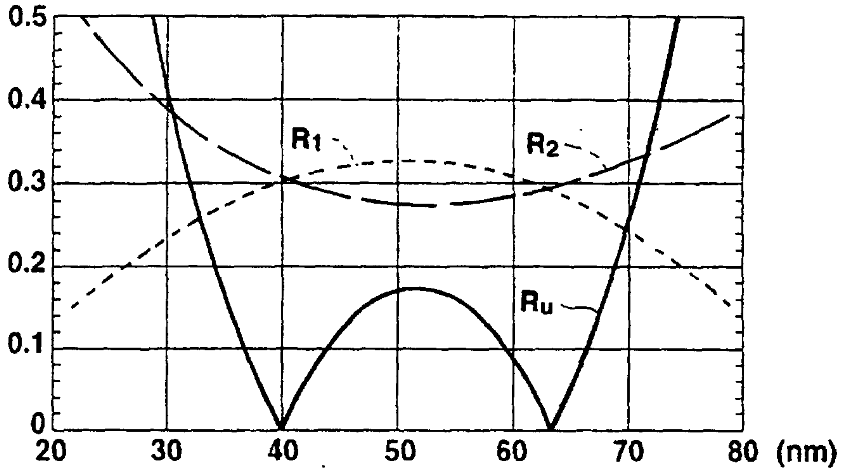


FIG.23A

(SiN : H2, λ = 480, n = 3.35, k = 0.26)

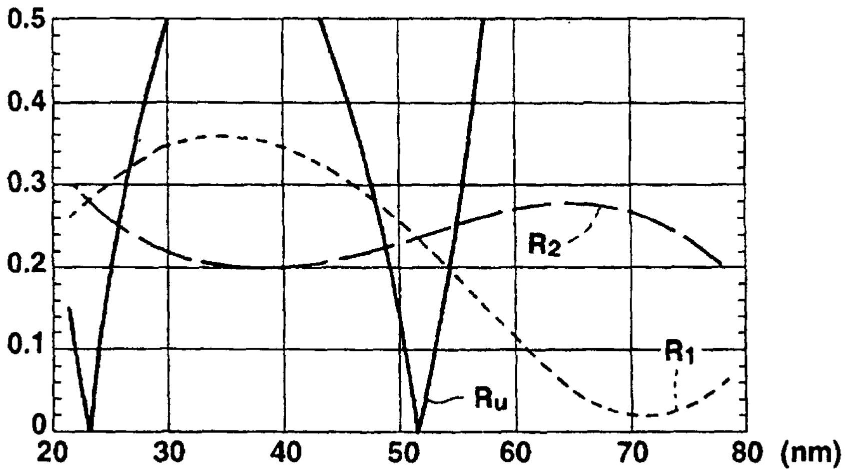


FIG.23B

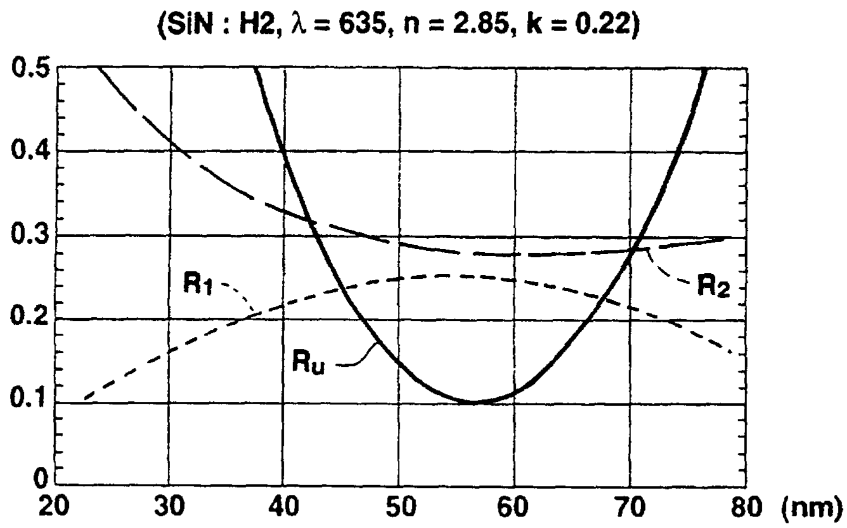


FIG.24A

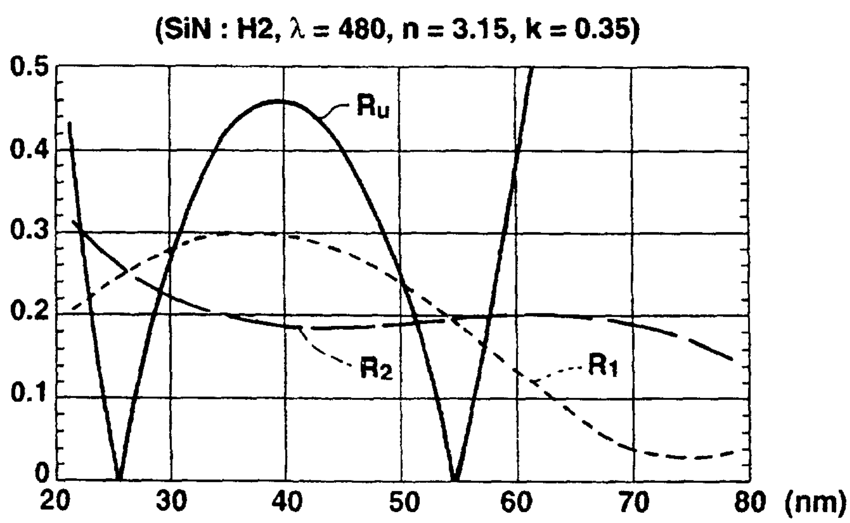


FIG.24B

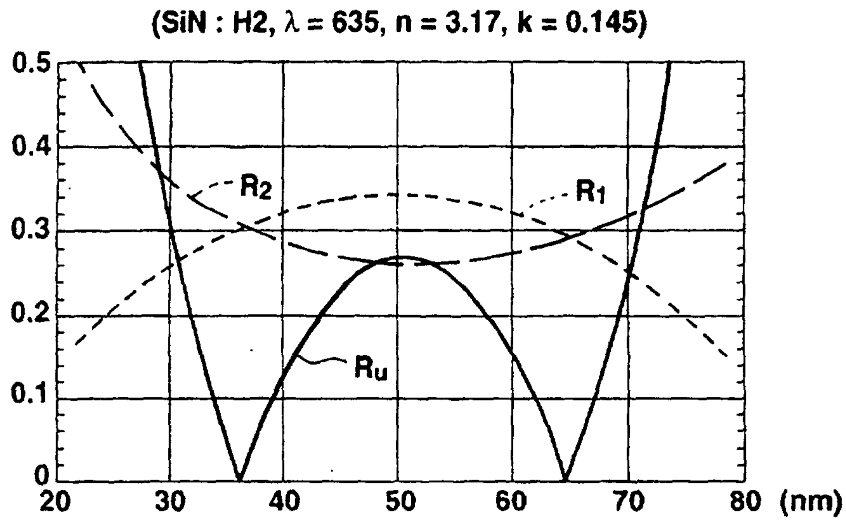


FIG.25A

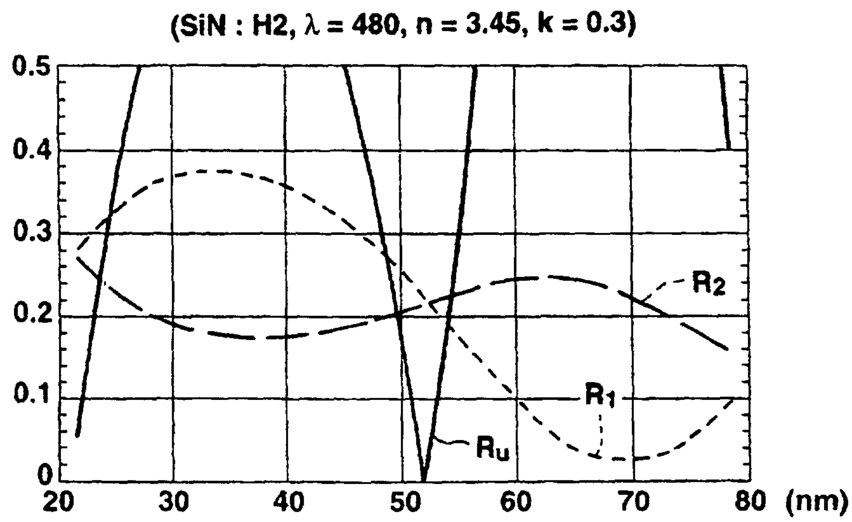


FIG.25B